# EUROPÄISCHE PATENTANMELDUNG

(11) **EP 4 656 904 A1**
(43) Veröffentlichungstag der Anmeldung: **03.12.2025**
(21) Anmeldenummer: 24178745.6
(22) Anmeldetag: 29.05.2024
(51) Int. Cl.: F16H 1/16, F16H 55/22

(54) **SCHRAUBRADGETRIEBE FÜR EINEN HILFSANTRIEB, INSBESONDERE FÜR EIN LENKGETRIEBE EINES KRAFTFAHRZEUGES**

(71) Anmelder: IMS Gear SE & Co. KGaA, 78166 Donaueschingen (DE)
(72) Erfinder: OBERLE, Stephan, 78050 Villingen-Schwenningen (DE); IRION, Manuel, 78647 Trossingen (DE); BIRK, Sebastian, 78647 Trossingen (DE); WILLMANN, Stefan, 78183 Hüfingen (DE); SCHERER, Stefan, 79877 Friedenweiler (DE)
(74) Vertreter: Westphal, Mussgnug & Partner Patentanwälte mbB

(57) **Zusammenfassung**

Die Erfindung betrifft ein Schraubgetriebe (10) für einen Hilfsantrieb, insbesondere für ein Lenkgetriebe eines Kraftfahrzeuges, mit folgenden Merkmalen:
- eine Schnecke (100) mit einer schraubenförmigen Verzahnung, die als Globoidverzahnung oder als globoidähnliche Verzahnung, ausgebildet ist,
- ein Schneckenrad (200), das mit der Schnecke (100) in kämmenden Eingriff steht,
- die Verzahnung der Schnecke (100) weist in mindestens einem seiner beiden axialen Randbereiche (112, 114) Zähne (130) mit einer im Vergleich zur Höhe (H1) der übrigen Zähne der Schnecke (100) geringeren Zahnhöhe (H2) auf.

Zusätzlich betrifft die Erfindung eine Schnecke für ein solches Schraubradgetriebe sowie ein Herstellverfahren für eine solche Schnecke.

## Beschreibung

Die Erfindung betrifft ein Schraubradgetriebe für einen Hilfsantrieb, insbesondere für ein Lenkgetriebe eines Kraftfahrzeuges, gemäß den Merkmalen des Oberbegriffs des Anspruchs 1, eine Schnecke in einem solchen Schraubradgetriebe sowie ein Verfahren zum Herstellen einer solchen Schnecke.

Ein Schraubradgetriebe eines Lenksystems eines Kraftfahrzeuges ist z. B. aus WO 2019/057377 A1 bekannt. Das Schraubradgetriebe weist eine Schnecke und ein Schneckenrad auf. Die Schnecke ist globoidisch oder als Globoid ausgebildet. Der Unterschied zwischen einem Globoid als Schnecke und einer globoidischen Schnecke wird darin gesehen, dass der Globoid über seine gesamte Längsausdehnung einen konstanten Abstand zum Schneckenrad einhält, wobei dies für eine globoidische Schnecke in diesem Dokument nicht zutreffen soll. Stattdessen weist eine globoidisch ausgeführte Schnecke einen Bereich entlang ihrer Längsausdehnung auf, der im Eingriff mit dem Schneckenrad steht und zwei weitere Bereiche, vor und hinter dem Eingriffsbereich, der nicht im Eingriff mit dem Schneckenrad stehen.

Ein weiteres Schraubradgetriebe für einen Hilfsantrieb in einem Kraftfahrzeug beschreibt die DE 19630567 A1. Dort wird das Schraubradgetriebe für Verstelleinrichtungen in Kraftfahrzeugsitzen, wie Sitzlängsverstellungen, Sitzlehnenverstellungen oder Sitzhöhenverstellungen eingesetzt. Das Getriebe verfügt ebenfalls über eine globoidische Schnecke und ein mit der Schnecke kämmendes Schneckenrad.

Im Vergleich zu Zylinder-Schneckengetrieben, bei denen die Schnecke zylindrisch ausgeführt ist, ist der Eingriffsbereich bei einer Globoidschnecke oder einer globoidischen Schnecke zwischen der Schneckenverzahnung und der Gegenverzahnung am Schneckenrad aufgrund der gewölbten Mantelfläche der Schnecke vergrößert. Es stehen mehr tragende Zähne in Eingriff, so dass das Modul der Verzahnung bei gleicher Sicherheit kleiner gewählt werden kann.

Schraubradgetriebe mit Globoidschnecken zeichnen sich im Vergleich zu Schraubradgetrieben mit zylindrischen Schnecken und globoidartig gestalteten Schraubrädern bei gleichem Abstand (Bauraum und Werkstoffen) durch eine höhere Lastübertragung und damit eine höhere Lebensdauer aus. Aufgrund der speziellen Verzahnungsgeometrie an den Globoidschnecken befinden sich vorteilhafterweise immer mehrere Zahnpaare gleichzeitig im Eingriff. Es besteht folglich eine sogenannte größere Überdeckung, die die Zahnfußspannung und Flankenpressung am Schraubrad bei gleichem Drehmoment reduziert. Andererseits kann mit einer Globoidschnecke bei Schraubradgetrieben bei gleicher Zahnfußspannung und Flankenpressung mehr Drehmoment übertragen werden als bei Schraubradgetrieben mit zylindrischer Schnecke.

Die vorliegende Erfindung hat das Ziel, die bekannten Schraubradgetriebe mit Globoidschnecke bzw. globoidartiger Schnecke derart weiter bezüglich Bauraum und Drehmoment zu verbessern, wobei trotzdem eine Beschädigung des Gegenrades im Betrieb ausgeschlossen bzw. weitgehend vermieden wird.

Diese Aufgabe wird durch ein Schraubradgetriebe mit den Merkmalen des Anspruchs 1 gelöst.

Die erfindungsgemäße Erkenntnis besteht im Wesentlichen darin, dass die Globoidverzahnung oder globoidähnliche Verzahnung der Schnecke in mindestens einem ihrer beiden axialen Randbereiche Zähne aufweist mit einer im Vergleich zu den übrigen Zähnen der Schnecke geringeren Zahnhöhe.

Anzumerken ist an dieser Stelle, dass im Folgenden bei der Verwendung der Begriffe Globoidschnecke oder Globoidverzahnung nicht nur Verzahnungen der Schnecke zu verstehen sind, die eine reine Globoidverzahnung von einem Ende der Schnecke zum anderen Ende der Schnecke aufweisen, sondern auch solche Verzahnungen, die einem Globoid ähnlich oder annähernd ähnlich oder auch nur abschnittsweise globoidisch sind.

Diese erfindungsgemäß geringere Zahnhöhe bei den Globoidschnecken führt dazu, dass die Globoidschnecke an ihren Randbereichen keine Beschädigung der Zähne am Schneckenrad verursachen können. Idealerweise sind mindestens ein oder mehrere Zähne an den beiden axialen Randbereichen der Schnecke mit einer geringeren Zahnhöhe ausgebildet ist als im Vergleich zur mittig in der Schnecke angeordneten Zähnen.

In einer Weiterbildung der Erfindung ist vorgesehen, dass die Schnecke einen mittleren Bereich oder Randbereich aufweist, der eine zylindrische Einhüllende hat. Im übrigen Bereich ist dagegen die Verzahnung globoidförmig ausgestaltet.

In einer anderen Ausbildung der Erfindung ist vorgesehen, dass die Verzahnung der Schnecke einen Fußkreis mit einem ersten Radius RF und einen Kopfkreis mit einem zweiten Radius RK aufweist. Dabei ist RK größer als RF gewählt, wobei ein gedachter Mittelpunkt des Fußkreises näher an einer Mittenachse der Schnecke liegt als ein gedachter Mittelpunkt des Kopfkreises. Auf diese Weise ist sichergestellt, dass die Zähne am äußeren Rand der Schnecke kürzer ausgebildet sind als in der Mitte der Schnecke.

In einer Weiterbildung der Erfindung ist vorgesehen, dass die Verzahnung der Schnecke zwischen Fußkreis und Kopfkreis zumindest abschnittsweise hohlballig ausgebildet ist. Hierdurch schmiegen sich beim Abwälzen von Schnecke und Schneckenrand die Zähne besser aneinander. Zusätzlich erhöht sich dadurch die sogenannte Flächenpressung, wodurch sich eine verbesserte Flankentragfähigkeit der Zahnradpaarung ergibt.

In einer anderen Ausbildung der Erfindung sind die scharfkantigen Zähne und insbesondere die Zahnköpfe der Schnecke verrundet ausgebildet. Durch die verrundete Ausbildung werden spitze Zähne abgeflacht und so eine Beschädigung des Gegenrads im Betrieb des Schraubradgetriebes wirksam vermieden.

In einer anderen Ausbildung der Erfindung beträgt der Eingriffswinkel des Schraubradgetriebes etwa zwischen 13° und 17°, vorzugsweise zwischen 14° und 16°.

Die Schnecke besteht beim erfindungsgemäßen Schraubradgetriebe aus Metall, insbesondere aus Automatenstahl, und das Schneckenrad vorzugsweise vollständig aus Kunststoff oder zumindest teilweise aus Kunststoff.

Das Schneckenrad kann eine Zahnkranzbreite von etwa 10mm bis 30mm, vorzugsweise 16mm bis 20mm, aufweisen.

Die Schnecke ist erfindungsgemäß symmetrisch oder asymmetrisch ausgebildet.

In einer Weiterbildung der Erfindung ist das Verhältnis Zahndicke von Schnecke zu Zahndicke des Schneckenrades im Bereich von etwa 20:80 bis 50:50.

Gegenstand der vorliegenden Erfindung ist auch eine Schnecke zur Verwendung in einem Schraubradgetriebe nach der Erfindung.

Ein bevorzugtes Verfahren zum Herstellen einer erfindungsgemäßen Schnecke kann folgende Verfahrensschritte aufweisen:
- Bereitstellen eines vorzugsweise zylindrischen Schneckenrohlings aus Metall,
- Einbringen einer umlaufenden konkaven Vertiefung mit einem Radius R, dessen Radiusmittelpunkt so gewählt ist, dass die Zähne in der Mitte der Schnecke mit vollständiger Höhe H1 und die Zähne am Rand der Schnecke mit gekappter Höhe H2 hergestellt werden,
- Einbringen einer globoidartigen Verzahnung oder Globoidverzahnung mit einem Fußkreisradius RF der kleiner als der Radius R ist.

Vorzugsweise erfolgt anschließend noch eine Verrundung mindestens der im Randbereich der Schnecke angeordneten Zähne in deren Kopfbereichen.

Wenngleich bei dem bevorzugten Herstellverfahren davon die Rede ist, dass in den Schneckenrohling aus Metall eine umlaufende konkave Vertiefung eingearbeitet sein soll, ist die vorliegende Erfindung hierauf nicht beschränkt. Vielmehr kann auf eine solche umlaufende konkave Vertiefung verzichtet werden, wenn die erfindungsgemäße Kontur und Gestaltung der Zähne der Schnecke mit einem beliebigen Abtragverfahren (Skiving, Strehlen, Wirbeln, Schleifen sowie Schneiden) in den Schneckenrohling eingearbeitet wird. Es ist lediglich darauf zu achten, dass die Zähne in mindestens einem der Randbereiche der Globoidschnecke eine geringere Höhe aufweisen als in der Mitte der Schnecke. Sollte sich bei diesem Herstellprozess herausstellen, dass sich durch die beispielsweise spanende Bearbeitung sehr scharfkantige oder spitze Zähne an der Globoidverzahnung der Schnecke herausbilden, ist vorzugsweise dann vorgesehen, dass die Zähne in ihren Kopfbereichen zumindest im Randbereich der Globoidverzahnung vorzugsweise über die gesamte Globoidverzahnung hin, verrundet werden. In einer Weiterbildung der Erfindung werden sämtliche Zähne der Schnecke an ihren Köpfen verrundet.

In den nachfolgenden Figuren wird anhand von Ausführungsbeispielen das erfindungsgemäße Schraubradgetriebe, die zugehörende Schnecke und dessen Herstellverfahren näher erläutert.

Es zeigen:
- Figur 1: eine bekannte Globoidschnecke eines Schraubradgetriebes nach dem Stand der Technik,
- Figur 2: ein Schraubradgetriebe mit einem Schneckenrad und einer Globoidschnecke nach der Erfindung,
- Figur 3: die Schnecke von Figur 1 in Detaildarstellung im Eingriffsbereich mit dem Schneckenrad,
- Figur 4: diverse Ansichten zum Herstellprozess einer Globoidschnecke nach der Erfindung mit verkürzten Zähnen im Randbereich der Globoidschnecke,
- Figur 5: diverse Darstellungen zu einem Zahnprofil mit Kopfmodifikationen,
- Figur 6: verschiedene Darstellungen von Globoidschnecken mit Kopfmodifikationen,
- Figur 7: Detaildarstellungen zu modifizierten Zahngeometrien im Randbereich der Globoidschnecke,
- Figur 8: zwei Abbildungen von Globoidschnecken im Eingriffsbereich mit einem Schneckenrad mit unterschiedlichen Zahndickenverhältnissen,
- Figur 9: zwei Darstellungen von Zähnen einer Schnecke mit geraden, konkaven bzw. hohlballigen und konvexem Flankenverlauf, und
- Figur 10: zwei Beispiele von schematisch dargestellten Schraubradgetrieben mit asymmetrischer Globoidschnecke.

In den nachfolgenden Figuren und in der nachfolgenden Beschreibung bezeichnen gleiche Bezugszeichen jeweils gleiche Teile mit gleicher Bedeutung, sofern nichts anderes explizit angegeben ist.

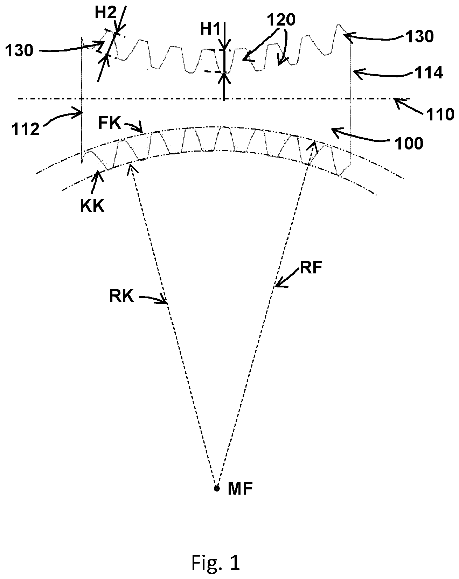

Figur 1 zeigt eine vorbekannte Schnecke 100, wie sie in vorbekannten Schraubgetrieben mit einem Schraubrad in Kämmung gebracht werden kann und als Globoidschnecke ausgebildet ist. Die Schnecke 100 ist symmetrisch gestaltet und weist eine Mittenachse 110 auf. Die Schnecke 100 verfügt über einen ersten Rand 112 und einen in der Darstellung von Figur 1 rechts gegenüberliegenden zweiten Rand 114. Die Globoidschnecke 100 weist eine um die Mittenachse 110 herum angeordnete, symmetrische Globoidverzahnung auf mit mittleren Zähnen 120 und äußeren Zähnen 130, welche nahe am ersten Rand 112 bzw. zweiten Rand 114 angeordnet sind. Alle Zähne 120, 130 der Glo-boidverzahnung dieser vorbekannten Schnecke 100 weisen eine gleiche Zahnhöhe auf. Die mittleren Zähne 120 verfügen über eine Höhe H1 und die äußeren Zähne über eine Höhe H2. Die Höhe H1 und H2 ergeben sich aus dem Abstand des Fußkreises FK der Globoidverzahnung zum Kopfkreis KK. Wie aus Figur 1 ersichtlich, verlaufen der Fußkreis FK und der Kopfkreis KK der Globoidverzahnung dieser vorbekannten Globoidschnecke 100 über die gesamte Länge der Schnecke 100 im gleichen Abstand zueinander, wodurch sich die identische Höhe aller Zähne der Globoidverzahnung der Globoidschnecke 100 ergibt. Dabei liegt der Fußkreis FK auf einem Radius RF und der Kopfkreis KK auf einen etwas kleineren Radius RK, welche jedoch einen gemeinsamen Mittelpunkt MF aufweisen.

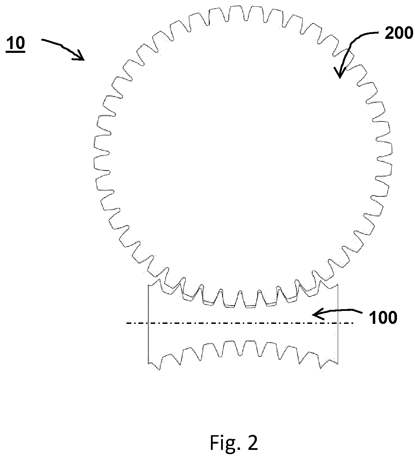

Figur 2 zeigt schematisch ein Schraubradgetriebe 10 nach der Erfindung. Dieses Schraubradgetriebe 10 weist eine Schnecke 100 aus Metall, vorzugsweise aus Automatenstahl, auf, die als Globoidschnecke mit einer globoidischen Verzahnung ausgeführt ist und mit einem Schraubrad 200 kämmt. Das Schraubrad 200 besteht erfindungsgemäß aus Kunststoff oder zumindest teilweise aus Kunststoff. Dabei kann das Schraubrad 200 auch aus mehreren Komponenten bestehen, also ein sogenanntes Mehrkomponentenzahnrad sein. Der Eingriffsbereich zwischen der Globoidschnecke 100 und dem Schraubrad 200 ist derjenige Bereich, in dem die Verzahnung der Schnecke 100 mit dem Schraubrad 200 kämmt. Im dargestellten Beispiel ist das Verzahnungsverhältnis etwa 80:20 gewählt. Die Zähne des Schraubrades 200 sind demnach etwa viermal so dick wie die Zähne der Schnecke.

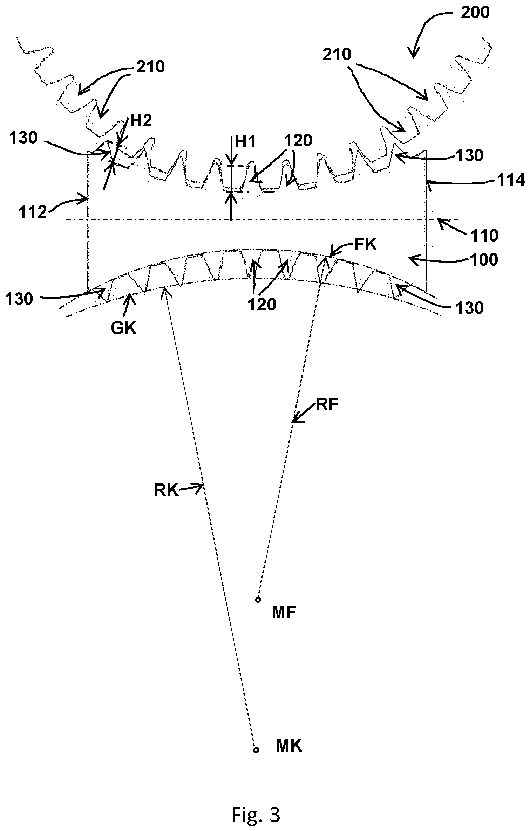

Die Verzahnung der Globoidschnecke 100 ist in deren Randbereich besonders gestaltet, nämlich kürzer als im übrigen Bereich. Dies wird aus der nachfolgenden Figur 3 deutlich.

Figur 3 zeigt eine vergrößerte Darstellung des Schraubradgetriebes 10 von Figur 1 im Eingriffsbereich. Die Schnecke 100 hat eine Mittenachse 110 und einen linken Randbereich 112 und einen rechten Randbereich 114. An ihrem Außenumfang ist die Schnecke 100 mit einer Globoidverzahnung versehen. Diese Verzahnung der Schnecke 100 verfügt über Zähne 120 im mittleren Bereich der Schnecke 100 und über Zähne 130, die nahe am linken Randbereich 112 bzw. rechten Randbereich 114 angeordnet sind. Wie deutlich aus Figur 2 ersichtlich ist, haben die Zähne 120 im mittleren Bereich der Schnecke 100 eine Höhe H1, die deutlich höher ist als die Höhe H2 der Zähne 130 in den beiden Randbereichen 112, 114 der Schnecke 100. Durch diese niedrigere Höhe H2 sowie eine bevorzugte Abrundung der Zähne 130, was in der nachfolgenden Figurenbeschreibung noch näher erläutert werden wird, ist sichergestellt, dass beim Kämmen der Schnecke 100 mit dem Schneckenrad 200 keine Beschädigung am empfindlichen und weicheren Schneckenrad 200 aus Kunststoff auftreten kann.

Wie aus Figur 3 weiter erkennbar ist, sind die Zähne 210 des Schneckenrades 200 deutlich dicker in ihrer Zahndicke ausgebildet als die Zähne 120 und 130 der Schnecke 100. Das Verhältnis von Zahndicke der Zähne 210 des Schneckenrades 200 zu der Zahndicke der Zähne 120, 130 der Schnecke 100 kann vorzugsweise im Bereich etwa zwischen 80:20 und etwa 50:50 liegen. Da die Tragfähgkeit bei Kunststoffzahnräder deutlich geringer ist als bei Metallzahnrädern, ist es bei einer Kunststoff-Metall-Paarung vorteilhaft, das aus Kunststoff bestehende Zahnrad, hier also das Schneckenrad, mit einer größeren Zahndicke zu versehen, also etwa im Bereich bis zu 80:20. Dieses Zahndickenverhältnis ist deutlich in Figur 3 zu erkennen.

Zusätzlich ist in Figur 3 der Fußkreises der Schneckenverzahnung mit FK bezeichnet. Dieser dreht sich um einen Mittelpunkt MF mit dem Radius RF. Der Kopfkreis GK der Verzahnung ist deutlich flacher als der Fußkreis FK ausgebildet und weist einen größeren Radius RK bzw. größeren, angenäherten Radiusverlauf RK, als RF auf. Zudem ist der Mittelpunkt MK des Radius RK weit entfernt zur Mittenachse 110 der Schnecke 100. Vorzugsweise liegt eine gedachte Gerade zwischen den Mittelpunkten MF und MK orthogonal zur Mittenachse 110 der Schnecke 100.

Grundsätzlich können die im Randbereich 112, 114 liegenden Zähne 130 der Schnecke 100 auf beliebige Art und Weise im Vergleich zu den Zähnen 120 in der Mitte der Schnecke 100 gekürzt und vorzugsweise auch verrundet werden. Hierfür kann z.B. eine vollständige Globoidverzahnung vorgesehen werden, die zunächst gleich hohe Zähne sowohl im Randbereich 112, 114 als auch in der Mitte der Schnecke 100 vorsieht. In einem anschließenden Bearbeitungsschritt werden dann die Zähne in den beiden Randbereichen 112, 114 entsprechend gekürzt und vorzugsweise auch verrundet. Dies ist allerdings ein sehr aufwändiges Verfahren zum Herstellen
einer erfindungsgemäßen Schnecke 100.

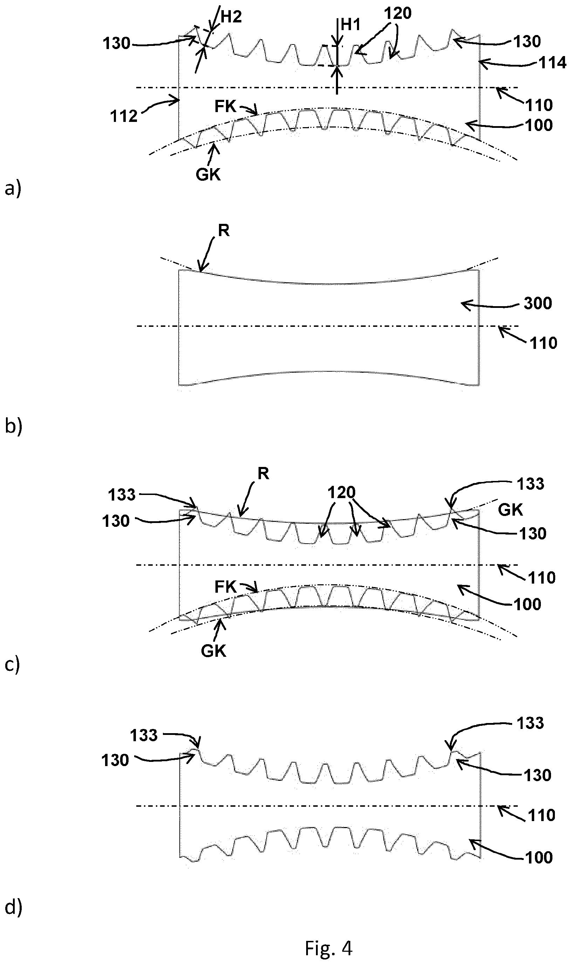

In Figur 4a ist ein erstes Beispiel einer erfindungsgemäßen Globoidschnecke 100 dargestellt. Die Zähne 120 in der Mitte der Schnecke 100 weisen eine Höhe H1 auf und die Zähne 130 im Randbereich der Globoidschnecke 100 eine Höhe H2, die geringer als die Höhe H1 ist. Der Radius des Fußkreises FK und damit dessen Wölbung, ist kleiner als der Radius und damit die Wölbung des Kopfkreises GK. Der Fußkreis FK und der Kopfkreis GK nähern sich damit zu den Randbereichen 112, 114 der Schnecke hin an.

Hergestellt werden kann eine solche Schnecke 100 auf beliebige Art und Weise. Es ist lediglich darauf zu achten, dass die Zähne 130 in den Randbereichen 112, 114 der Schnecke 100 eine geringere Höhe H2 aufweisen als die Zähne 120 in der Mitte der Schnecke 100. Ein beispielhaftes Verfahren zum Herstellen einer solchen Schnecke 100, die aus Metall gebildet ist, besteht darin, in einen metallischen Rohling zunächst eine globoidische Zahnkontur einzuschneiden z. B. mit einem Zahnverhältnis 50:50. Die Zahnlücken sind damit etwa gleich groß wie die Zahnköpfe. Anschließend wird durch eine Zahndickenreduzierung die Verzahnung so bearbeitet, dass die Zahnköpfe deutlich schmäler werden und damit die Zahnfüße breiter. Bei einer derartigen Zahnkopfreduzierung der Globoidverzahnung werden die Zähne 130 im Randbereich 112, 114 der Schnecke 100 quasi automatisch gekürzt, so dass diese eine verringerte Höhe H2 im Vergleich zur Höhe H1 der Zähne 120 in der Mitte der Schnecke 110 aufweisen. Bei einer solchen Zahndickenreduzierung werden die Zähne 130 im Randbereich 112, 114 der Schnecke 100 durch den Schneidprozess verhältnismäßig spitz und scharfkantig. In einem nachfolgenden Bearbeitungsschritt werden dann bevorzugt zumindest die Zähne 130 im Randbereich, vorzugsweise aber auch die Zähne 120 in der Mitte der Schnecke 100 und besonders bevorzugt sämtliche Zähne der Schnecke 100, verrundet.

Ein bevorzugtes anderes Herstellverfahren der erfindungsgemäßen Schnecke ist in den Figuren 4b bis 4d illustriert. Zur Herstellung der Schnecke 100 wird zunächst ein metallischer Schneckenrohling 300 bereitgestellt, der an seiner zur Mittenachse 110 umlaufenden Wandung bereits mit einem Radius R versehen ist. (Vgl. Figur 4b) Dieser Radius R ist so gewählt, dass bei einem nachfolgenden Schritt, bei dem die Globoidverzahnung in den Rohling 300 eingearbeitet wird, die im Randbereich 112, 114 befindlichen Zähne 130 keine Spitzen 130 aufweisen können, weil beim Schneiden der Globoidverzahnung in den Rohling 300 an dieser Stelle des Rohlings 300 überhaupt kein Material vorhanden ist. Dieses Prinzip ist in Figur 4c angedeutet.

Das Schneiden der Globoidstruktur in den Rohling 300 erfolgt dermaßen abgestimmt, dass die Zähne 120 in der Mitte der herzustellenden Schnecke 100 vollständig in ihrer Höhe H1 ausgebildet werden können. Je näher die Zähne allerdings zu den beiden Randbereichen 112, 114 der Schnecke 100 hin angeordnet sind, wird aufgrund des gewählten Radius R im Rohling 300 zunehmend die Höhe H2 der Zähne reduziert aufgrund des dort fehlenden Materials des Rohlings 300. Der an dieser Stelle nicht vorhandene Zahnbereich ist mit dem Bezugszeichen 133 in Figur 4c angedeutet, wobei der über dem Radius R liegende Zahnbereich zwar zeichnerisch dargestellt ist, dieser de facto aber nicht beim Schneiden der Globoidverzahnung wegfällt, sondern dort überhaupt nicht vorhanden ist. Lediglich zu Illustrationszwecken ist der nicht vorhandene Zahnbereich 133 in der Figur 4c angedeutet.

Wie aus Figur 4c weiter ersichtlich ist, weist die Schnecke 100 eine Verzahnung auf mit einem Fußkreis FK, der dem Fußkreis FK der in Figur 4a gezeigten Globoidschnecke 100 entspricht.

Der Kopfkreis der Schnecke 100 ist in Figur 4c auch mit dem Bezugszeichen GK bezeichnet. Dieser Kopfkreis GK der Globoidschnecke 100 ist identisch oder nahezu identisch zum Radius R des Rohlings 300. Es ist deutlich erkennbar, dass dieser Kopfkreis GK bzw. R der Globoidschnecke nach der Erfindung einen größeren Radius aufweist als der Kopfkreis GK von Figur 4a, also einer herkömmlichen Globoidschnecke, bei der die Zähne der Schnecke alle gleich hoch sind.

In Figur 4d ist die so aus dem in Figur 4b hergestellten Rohling mit Radius R hegestellte Schnecke 100 dargestellt.

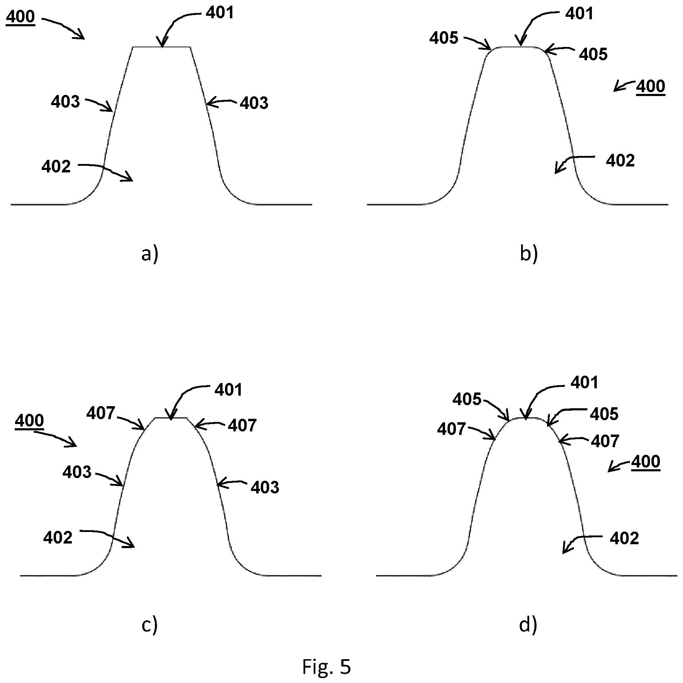

In Figur 5 wird im Rahmen von mehreren Teilfiguren Grundsätzliches zu Zahnprofilen ohne Kopfmodifikation und mit Kopfmodifikation erläutert. Figur 5a zeigt ein übliches Zahnprofil eines Zahnes beispielsweise einer Schnecke. Der Zahn ist mit dem Bezugszeichen 400 bezeichnet. Der Zahn 400 weist einen Zahnkopf 401 und einen Zahnfuß 402 auf, die über gegenüberliegende Flanken 403 miteinander in Verbindung stehen. Im dargestellten Ausführungsbeispiel von Figur 5a hat der Zahnkopf 401 einen waagerechten Verlauf und verfügt an seinen beiden Enden über einen kantigen Übergang zu den Zahnflanken 403.

In der Figur 5b ist dieser Zahn 400 an den erwähnten Kanten mit einem sogenannten Kopfradius versehen. Der Kopfradius ist links und rechts mit dem Bezugszeichen 405 bezeichnet. Der Kopfradius 405 führt zu einer Verrundung der erwähnten Kanten des Zahnes 400 von Figur 5a.

Eine weitere Kopfmodifikation eines Zahnes 400 zeigt Figur 5c. Hier wird an den Kanten des Zahnes 400 von Figur 5a Material abgetragen und zwar deutlich mehr als lediglich bei der Herstellung eines Kopfradiusses 405 gemäß Figur 5b.

Wie aus Figur 5c ersichtlich, bleibt jedoch bei einer Kopfrücknahme an den oberen Flanken 403 des Zahnes 400 links und rechts vom Zahnkopf 401 immer noch jeweils eine kleine Kante bestehen.

Figur 5d zeigt einen Zahn 400, bei dem sowohl ein Kopfradius als auch eine Kopfrücknahme 407 erfolgt ist. Es ist deutlich erkennbar, dass der Zahnkopf 401 nicht nur abgerundet, sondern auch deutlich dünner als die Zahnköpfe von Figur 5a und Figur 5b sind.

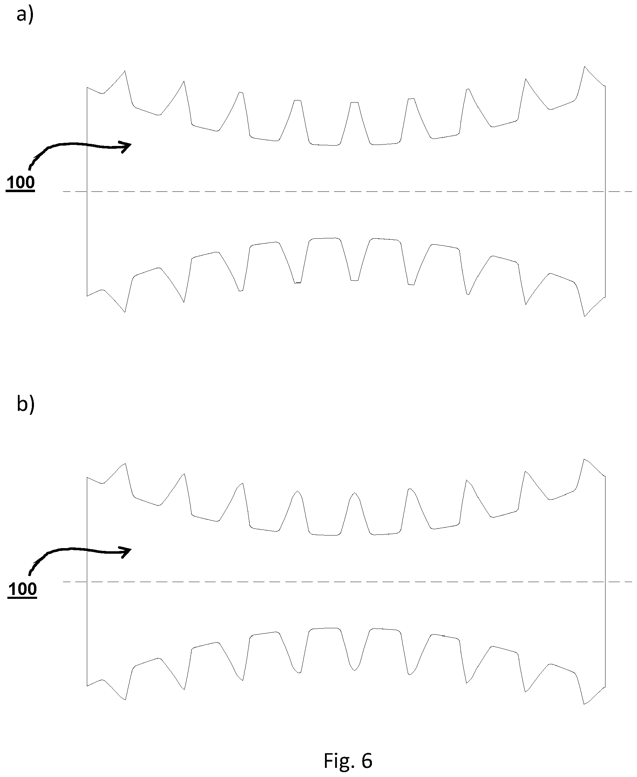

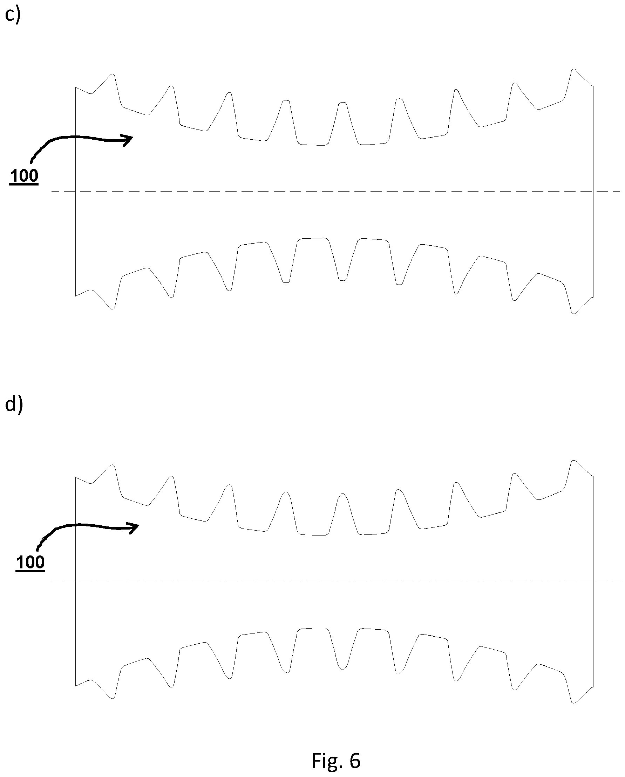

Eine solche Kopfmodifikation insbesondere der Zähne 130 im Randbereich der erfindungsgemäßen Globoidschnecken 100 wird im Zusammenhang mit Figur 6 schematisch dargestellt.

Figur 6a zeigt das Zahnprofil einer Globidschnecke 100 ohne Kopfmodifikation.

Figur 6b zeigt das Profil der Verzahnung der Globoidschnecke 100 mit Kopfrücknahme bei den Zähnen im Randbereich der Globoidschnecke 100.

Figur 6c zeigt das Zahnprofil modifiziert mit einem Kopfradius und Figur 6d zeigt das Zahnprofil der Globoidschnecke mit Kopfrücknahme und Kopfradius.

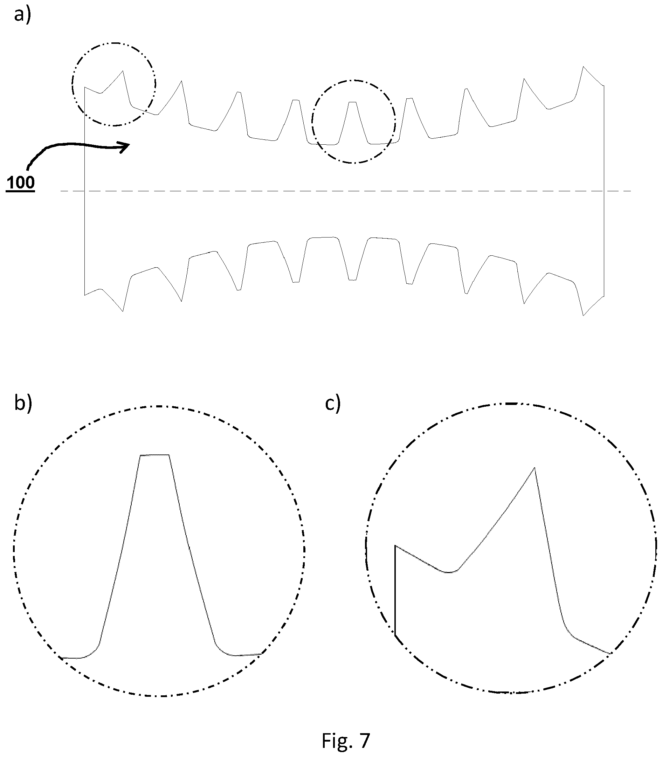

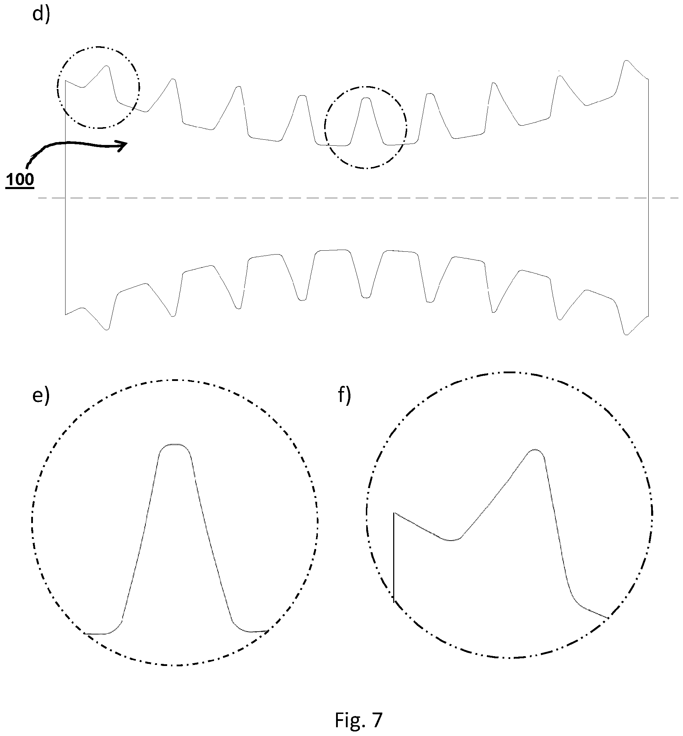

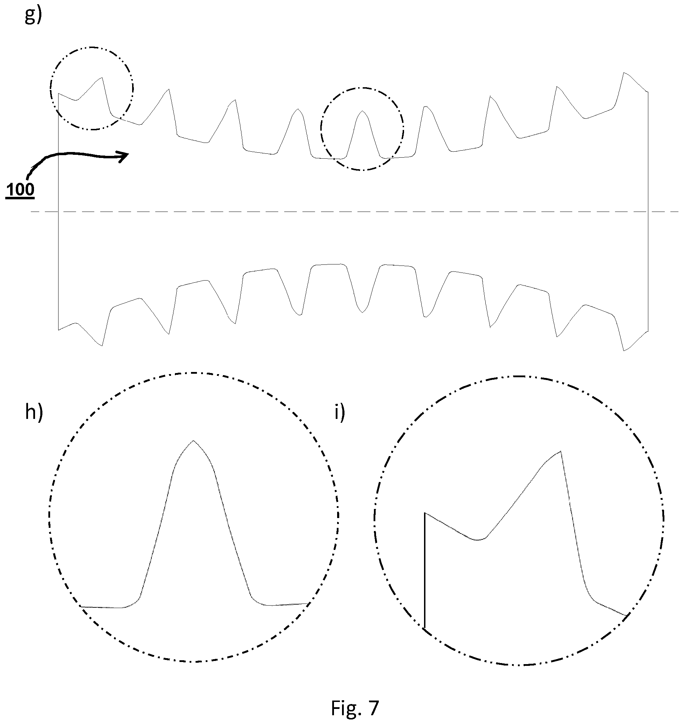

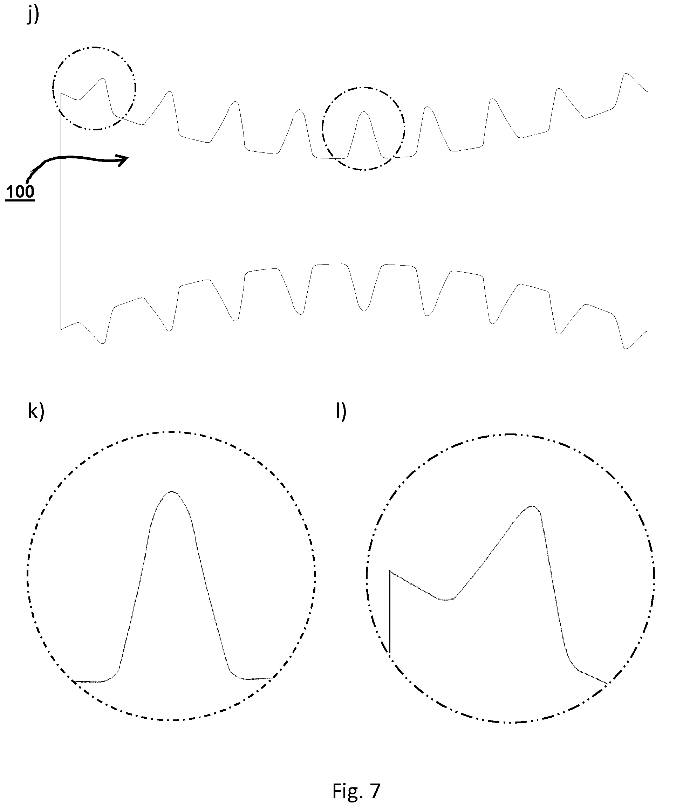

Da die Profilierungen der Zähne 130 im Randbereich der Globoidschnecke 100 in Figur 6 nur schlecht zu erkennen sind, ist in Figur 7 das Prinzip der Zahnprofilierung mit Zahnkopfrundung und Zahnkopfrücknahme vergrößert dargestellt.

Figur 7a zeigt eine Globoidschnecke 100, bei der die Zähne zum linken und rechten Rand der Schnecke 100 kürzer als in der Mitte der Schnecke 100 ausgebildet sind.

Figur 7b zeigt, vergrößert aus Figur 7a, wie ein Zahn beispielsweise in der Mitte der Globoidschnecke 100 ausgebildet ist.

Figur 7c zeigt, den vergrößert dargestellten Zahn am linken Rand der Globoidschnecke 100 von Figur 7a. Die Flanken dieses Zahnes sind unterschiedlich lang und der Zahn ist asymmetrisch. Deutlich zu erkennen ist jedoch, dass dieser Zahn spitz ausgebildet ist, was zu den oben erwähnten Problemen beim Kämmen mit einem Kunststoffschneckenrad führen kann, wenn der Zahn zu lang ausgebildet wäre.

Figur 7d zeigt die Schnecke 100, bei der alle Zähne eine Kopfrundung aufweisen.

Figur 7e zeigt einen Zahn in der Mitte der Globoidschnecke 100 mit deutlich abgerundetem Zahnkopf und Figur 7f zeigt einen zugehörenden Zahn mit Kopfrundung im Randbereich der Globoidschnecke 100.

Figur 7g zeigt ebenfalls eine Globoidschnecke 100, allerdings ist hier eine Zahnkopfrücknahme, also ein deutlicher Materialabtrag im Bereich des Zahnkopfes durchgeführt worden und zwar an den linken und rechten oberen Flanken des Zahnes.

In Figur 7h ist ein Zahn in der Mitte der Globoidschnecke 100 dargestellt und in Figur 7i ein zugehörender Zahn der Globoidschnecke 100 im Randbereich der Globoidschnecke 100.

Figur 7j zeigt schließlich eine Globoidschnecke 100 mit Zahnkopfrundung und Zahnkopfrücknahme. Der zugehörende Zahn in der Mitte dieser Globoidschnecke ist in Figur 7k und ein Zahn im Randbereich der Globoidschnecke 100 in Figur 7l gezeigt. Es ist deutlich an der Kontur des Zahnes in Figur 7l zu erkennen, dass dieser keine Spitze mehr aufweist, was im Sinne der vorliegenden Erfindung gewollt ist.

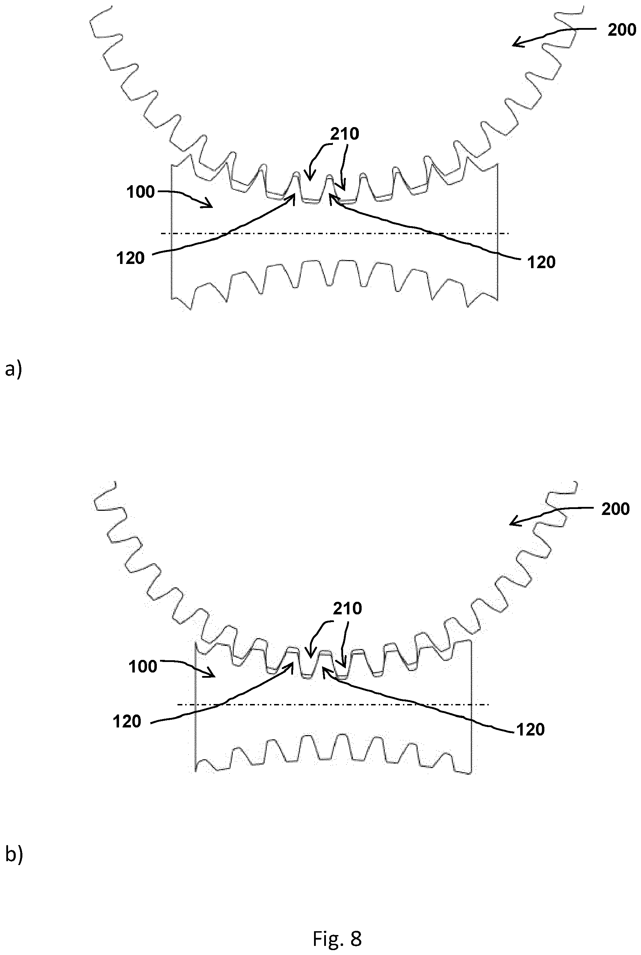

Figur 8a zeigt die erfindungsgemäße Zahnradpaarung mit einem Zahndickenverhältnis von etwa 80:20, d.h. die Zähne 210 des Schneckenrades 200 sind etwa viermal so dick wie die Zähne der metallischen Schnecke 100. Figur 8b zeigt eine ähnliche Zahnradpaarung, allerdings mit einem Zahndickenverhältnis von etwa 50:50 und gekappten Zähnen in den Randbereichen der Schnecke 100. Beide Zahnradpaarungen liegen im Rahmen der vorliegenden Erfindung. Die am Randbereich befindlichen Zähne der Schnecke 100 sind jeweils deutlich weniger hoch als die Zähne in der Mitte der Schnecke 100. Zudem sind diese Zähne vorzugsweise abgerundet.

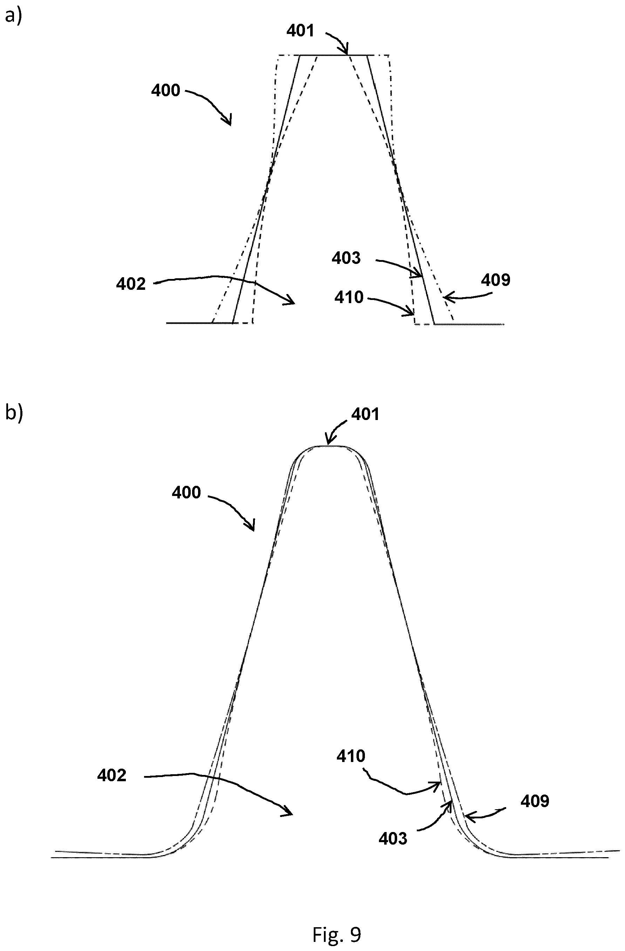

Eine weitere Variante zur Ausbildung und Modifizierung der Zähne der Globoidschnecke 100 ist schematisch in Figur 9 dargestellt. Dort ist in Figur 9a ein Zahn 400 dargestellt mit Zahnflanken 403 und einem Zahnkopf 401 und einem Zahnfuß 402. Die Zahnflanken 403 verlaufen geradlinig. Mit 410 ist eine ballige Ausführung der Zahnflanken 403 angedeutet und mit den Bezugszeichen 409 der Verlauf von konkaven bzw. hohlballigen Flanken 403. Es hat sich als günstig herausgestellt bei der Realisierung der Globoidschnecke 100 nach der vorliegenden Erfindung eine hohlballige bzw. leicht hohlballige Gestalt der Flanken 403 der Zähne vorzusehen, weil dies zu einer besseren Flankentragfähigkeit beiträgt. Eine solche Ausführungsform zeigt Figur 9b. Während in Figur 9a die konkave bzw. konvexe Ausbildung der Zahnflanken 403 stark übertrieben dargestellt ist, zeigt Figur 9b in etwa die wahren Größenverhältnisse bei einer Globoidschnecke 100 nach der vorliegenden Erfindung und es ist deutlich zu erkennen, dass die Hohlballigkeit im Wesentlichen im Bereich des Zahnfußes bzw. nahe am Zahnfuß 402 vorgesehen ist.

Während bisher Globoidschnecken 100 beschrieben wurden, die symmetrisch ausgebildet sind, liegt es auch im Rahmen der vorliegenden Erfindung Globoidschnecken bei dem Schraubradgetriebe 10 einzusetzen, die asymmetrisch gestaltet sind und lediglich einen globoidischen Teil bzw. Abschnitt der Verzahnung aufweisen.

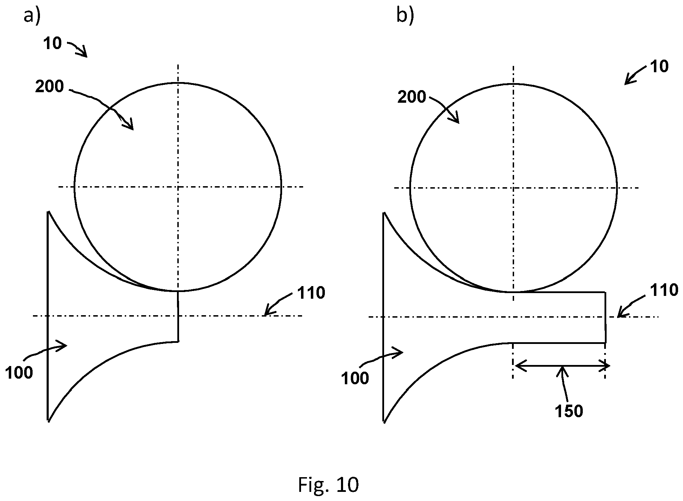

In Figur 10a ist die Globoidschnecke 100 als Halbgloboid ausgeführt. Im Wesentlichen entspricht dies einer Schnecke 100, wie diese in den vorangegangenen Beispielen besprochen wurde, wobei die Schnecke 100 auf ihrer halben Länge der Mittenachse 110 getrennt ist und nur eine Hälfte dieser Globoidschnecke 100 zur Anwendung im Schraubradgetriebe 10 kommt. Figur 10b zeigt ebenfalls eine solche Halbgloboidschnecke. Allerdings schließt sich an den Halbgloboid der Schnecke 100 ein zylindrischer Anteil 150 an, also eine zylindrische Einhüllende, die vorzugsweise ebenfalls mit einer Verzahnung versehen sein kann. Dieser zylindrische Teil ist in Figur -10b mit dem Bezugszeichen 150 bezeichnet.

### Bezugszeichenliste

- 10: Schraubradgetriebe
- 100: Globoidschnecke
- 110: Mittenachse
- 112: erster Rand
- 114: zweiter Rand
- 120: mittlere Zähne
- 130: äußere Zähne
- 133: nicht vorhandener Zahnbereich
- 150: zylindrischer Bereich

- 200: Schneckenrad
- 210: Zähne
- 300: Schneckenrohling

- 400: Zahn ohne Kopfmodifikation
- 401: Zahnkopf
- 402: Zahnfuß
- 403: Zahnflanke
- 405: Kopfradius
- 407: Kopfrücknahme
- 409: hohballige Zahnflanke (konkave Zahnflanke)
- 410: konvexe Zahnflanke

- R: Radius
- H1: erste Höhe
- H2: zweite Höhe
- FK: Fußkreis
- GK: Kopfkreis der Globoidschnecke
- RF: Radius Fußkreis
- RK: Radius Kopfkreis
- MF: Mittelpunkt Fußkreis
- MK: Mittelpunkt Kopfkreis

## Patentansprüche

1. Schraubradgetriebe (10) für einen Hilfsantrieb, insbesondere für ein Lenkgetriebe eines Kraftfahrzeuges, mit
- einer Schnecke (100) mit einer schraubenförmigen Verzahnung, die als Globoidverzahnung oder als globoidähnliche Verzahnung, ausgebildet ist,
- einem Schneckenrad (200), das mit der Schnecke (100) in kämmenden Eingriff steht,
**dadurch gekennzeichnet, dass**
die Verzahnung der Schnecke (100) in mindestens einem seiner beiden axialen Randbereiche (112, 114) Zähne (130) mit einer im Vergleich zur Höhe (H1) der übrigen Zähne der Schnecke (100) geringeren Zahnhöhe (H2) aufweist.

2. Schraubradgetriebe (10) nach Anspruch 1,
**dadurch gekennzeichnet, dass** die Schnecke (200) an ihren beiden axialen Randbereichen (112, 114) ein oder mehrere Zähne (130) mit einer im Vergleich zu mittig in der Schnecke angeordneten Zähnen (120) geringeren Zahnhöhe (H2) aufweist.

3. Schraubradgetriebe (100) nach Anspruch 1 oder 2,
**dadurch gekennzeichnet, dass** die Schnecke (200) einen mittleren Bereich oder Randbereich aufweist, der eine zylindrische Einhüllende oder einen zylindrischen Bereich (150) hat.

4. Schraubradgetriebe (100) nach Anspruch 1, 2 oder 3,
**dadurch gekennzeichnet, dass** die Verzahnung der Schnecke (100) einen Fusskreis (FK) mit einem ersten Radius oder zumindest angenäherten Radius (RF) und einen Kopfkreis (GK) mit einem zweiten Radius (RK) aufweist, wobei ein gedachter Mittelpunkt des Fusskreises (FK) näher an einer Mittenachse (110) der Schnecke (100) liegt als ein gedachter Mittelpunkt (MK) des Kopfkreises (GK).

5. Schraubradgetriebe (10) nach Anspruch 4,
**dadurch gekennzeichnet, dass** die Verzahnung der Schnecke (100) zwischen Fusskreis (FK) und Kopfkreis (GK) zumindest abschnittsweise mit einer hohlballigen Zahnflanke (409) ausgebildet ist.

6. Schraubradgetriebe (10) nach einem der Ansprüche 1 bis 5, **dadurch gekennzeichnet, dass** die Zahnköpfe (401) der Schnecke (100) verrundet ausgebildet sind.

7. Schraubradgetriebe (10) nach einem der vorangegangenen Ansprüche,
**dadurch gekennzeichnet, dass** ein Eingriffswinkel des Schraubradgetriebes (10) zwischen 13° und 17°, vorzugsweise zwischen 14° und 16, liegt.

8. Schraubradgetriebe (10) nach einem der vorangegangenen Ansprüche,
**dadurch gekennzeichnet, dass** die Schnecke 100 aus Metall, insbesondere aus Automatenstahl, besteht.

9. Schraubradgetriebe (10) nach einem der vorangegangenen Ansprüche,
**dadurch gekennzeichnet, dass** das Schneckenrad (200) zumindest teilweise, vorzugsweise vollständig, aus Kunststoff gebildet ist.

10. Schraubradgetriebe (10) nach einem der vorangegangenen Ansprüche,
**dadurch gekennzeichnet, dass** das Schneckenrad (10) eine Zahnkranzbreite von etwa 10mm bis 30mm, vorzugsweise 16mm bis 20mm, aufweist.

11. Schraubradgetriebe nach einem der vorangegangenen Ansprüche, **dadurch gekennzeichnet, dass** die Schnecke (100) asymmetrisch ausgebildet ist.

12. Schraubradgetriebe (10) nach einem der vorangegangenen Ansprüche,
**dadurch gekennzeichnet, dass** das Verhältnis Zahndicke von Schnecke (100) zu Zahndicke des Schneckenrades (200) im Bereich von etwa 20:80 bis 50:50 liegt.

13. Schnecke (100) zur Verwendung in einem Schraubradgetriebe (10) nach einem der Ansprüche 1 bis 12.

14. Verfahren zum Herstellen einer Schnecke (100) nach Anspruch 13 mit folgenden Verfahrensschritten:
- Bereitstellen eines stangenförmigen Schneckenrohlings (300) aus Metall,
- Einbringen einer umlaufenden konkaven Vertiefung mit einem Radius R, wobei dessen Radiusmittelpunkt so gewählt ist, dass die Zähne (120) in der Mitte der Schnecke (100) mit vollständiger Höhe (H1) und die Zähne (130) am Rand der Schnecke (100) mit reduzierter Höhe (H2) hergestellt werden,
- Einbringen einer globoidartigen Verzahnung in die konkave Vertiefung mit einem Fusskreisradius (RF), der kleiner als der Radius R ist,
- Verrundung mindestens der im Randbereich der Schnecke (100) angeordneten Zähne (130) in deren Kopfbereich (401).

15. Verfahren nach Anspruch 14,
**dadurch gekennzeichnet , dass** alle Zähne (120, 130) der Schnecke (100) an ihren Köpfen (401) verrundet werden.
